# EUROPEAN PATENT SPECIFICATION

(11) **EP 2 210 336 B1**
(45) Date of publication and mention of the grant of the patent: **31.08.2016**
(21) Application number: 08831456.2
(22) Date of filing: 19.09.2008
(51) Int. Cl.: H02N 15/00

(54) **MAGNETIC LEVITATION APPARATUS**
MAGNETISCHE SCHWEBEVORRICHTUNG
APPAREIL À LÉVITATION MAGNÉTIQUE

(30) Priority: 19.09.2007 NL 2000863
(43) Date of publication of application: 28.07.2010
(73) Proprietor: Crealev B.V., 5764 RK De Rips (NL)
(72) Inventor: JANSEN, Gerardus Lucien Mathildus, NL-5764 RK De Rips (NL)
(74) Representative: Verhees, Godefridus Josephus Maria
(86) International application number: PCT/NL2008/050615
(87) International publication number: WO 2009/038464

(56) References cited:
- WO-A-2004/030198
- US-A- 3 512 852
- US-A- 4 585 282
- US-A1- 2007 170 798
- SAMIR MITTAL ET AL: "Precision Motion Control of a Magnetic Suspension Actuator Using a Robust Nonlinear Compensation Scheme" IEEE / ASME TRANSACTIONS ON MECHATRONICS, IEEE SERVICE CENTER, PISCATAWAY, NJ, US, vol. 2, no. 4, 1 December 1997 (1997-12-01), XP011034445 ISSN: 1083-4435
- ECHEVERRIA I ET AL: "HIGH-PRECISION MAGNETIC LEVITATION DEVICE WITH ELECTRO-OPTICAL FEEDBACK" REVIEW OF SCIENTIFIC INSTRUMENTS, AIP, MELVILLE, NY, US, vol. 66, no. 7, 1 July 1995 (1995-07-01), pages 3931-3938, XP000524298 ISSN: 0034-6748

## Description

### Field of the invention.

The invention relates to apparatus for orienting a magnetic object in free space with the aid of magnetic levitation, the apparatus comprising:
a magnet array comprising at least three magnets and being arranged in a circle around an imaginary axis, which magnet array generates a static magnetic field with an equilibrium location in this field at which the magnetic object can be maintained;
sensor means for detecting location deviations between the current location of the magnetic object and the equilibrium location and, based on the result of the sensing operation, for generating and delivering control signals to:
   a coil array comprised of at least three controllable coils, the coil array generating a controllable magnetic field for maintaining the magnetic object at the equilibrium location, each coil of the coil array being arranged at least partly outside the circle in radial direction from the imaginary axis,
   wherein the magnetic polarisation of the magnetic object is opposite to that of the magnet array, and
   wherein the number of magnets of the magnet array is equal to the number of coils of the coil array, and the magnets of the magnet array and the coils of the coil array are arranged in pairs.

### State of the art.

An apparatus of this type is known from US 4 585 282. In this known apparatus the magnets are circular shaped and one above the other. The coils each have a shape of the circumference of a quarter of the surface of a circle and are above the upper magnet. A disadvantage of this known apparatus is that maintaining the magnetic object at an equilibrium location is not very stable and can be effected only in orthogonal direction. As a result, the magnetic object can be maintained at limited levitation heights while furthermore maintaining the object at the relevant equilibrium location is highly unstable, which renders the intended control both complex and dear.

Furthermore, the equilibrium location is only marginally stable because one tries to stabilize the system by means of a controlled degree of freedom. This renders the control usable only to a limited extent and also limits the supporting power of the magnetic object. In consequence, the known magnetic levitation apparatus requires a high power level relative to a limited and little stable levitation height control.

### Summary of the invention.

The invention has for its object to provide improved magnetic levitation apparatus as stated in the opening paragraph, which does not have the disadvantages of the state of the art. To this end the apparatus is characterized in that the magnets and the coils are oriented in pairs where each magnet and controllable coil forms a pair, which pairs forming a circumferential or circular pattern.. This provides a more efficient control, so that a stable orientation of the magnetic object at large levitation heights is made possible. This makes a stable orientation possible that does not readily turn into an unstable location.

In a specific compact embodiment the magnets are segments of a circle-shaped magnet array. For the purpose of stable levitation control, according to the invention the magnetic object forms part of the invention and comprises various magnets which are also arranged in a circle.

In a further embodiment the coils are arranged on the outside of the circular pattern formed by the magnets.

In a further particular embodiment the sensor means cooperate with at least one marking element fixed to the magnetic object. This provides that an accurate measurement of the magnetic object can be obtained and hence more stable control for an array at larger levitation heights.

According to the invention the sensor means may comprise at least one light emitting element and at least one light receptor element and the marking element comprises at least one light reflecting surface, while in a particular embodiment the light receptor element is embodied as an image camera. The light receptor element may then comprise at least one or more photodiodes which may optionally be arranged as an array.

Furthermore, according to the invention the light receptor element may comprise a lens element. With said alternative particular embodiments, simple but accurate control is made possible for orienting the magnetic object at the equilibrium location at any desired levitation height.

In order to further simplify the control so that undesired unstable locations of the magnetic object relative to the equilibrium location can be corrected in a fast and adequate manner, the apparatus according to the invention is characterized in that the light receptor element is located on the symmetry axis of the static magnetic field. In another embodiment the apparatus is characterized in that the light emitting element is located on the symmetry axis of the static magnetic field.

### Brief description of the drawings.

The invention will now be described in more detail based on embodiments while reference is made to the appended drawing figures, in which:
Fig. 1A shows an embodiment of apparatus according to the invention;
Fig. 1B shows the magnetic field of the magnet array with therein the location of the magnetc object;
Fig. 2 shows a three-dimentional view of apparatus according to the invention;
Figs. 3a and 3b (schematically) show other embodiments of the static part of the apparatus according to the invention; and
Figs. 4a to 4c show further detailed views of various embodiments of apparatus according to the invention.

### Detailed description of the drawings.

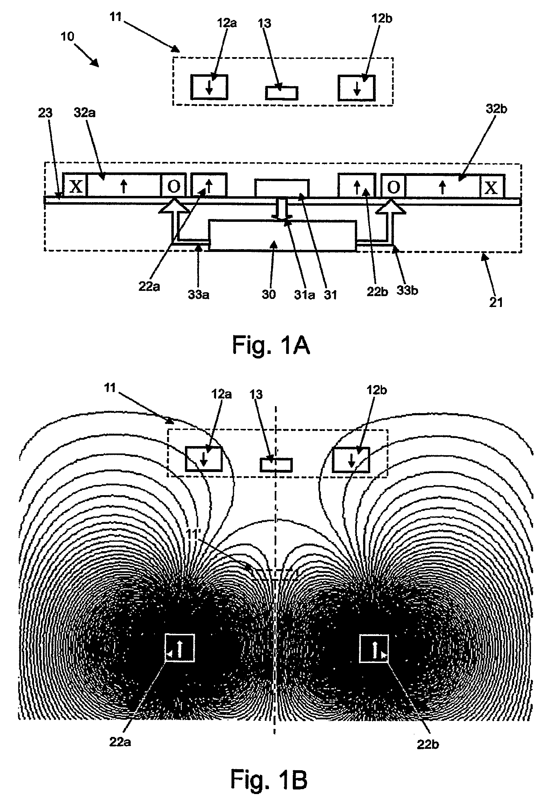

For better understanding of the invention like reference numerals will be used for like elements in the following description of the drawing figures. Fig. 1A shows in a sectional view in x or y direction a first embodiment of apparatus according to the invention carrying reference numeral 10. The apparatus 10 relates to a magnetic levitation apparatus 21 which orients a magnetic object 11 at a specific height in free space (at an equilibrium location) by means of magnetic levitation.

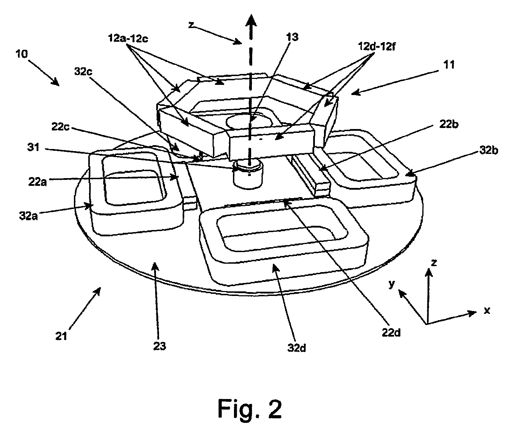

The apparatus according to the invention is arranged for maintaining the magnetic object 11 at an equilibrium location because the apparatus 21 is arranged for urging a displacement in a horizontal xy plane as a result of location deviations adopted by the magnetic object 11 relative to the equilibrium location. The sectional view of the apparatus as shown in Fig. 1 discloses the necessary elements for orienting the magnetic object 11 in the x direction. For adapting the orientation in the y direction (perpendicular to the x direction) the apparatus 21 comprises the same elements as shown in Fig. 1. A full cutaway view of the embodiment of the apparatus 10 is shown in Fig. 2.

The apparatus 21 is to be regarded as a stationary element and comprises (in orthogonal x direction) two stationary magnets 22a and 22b. As shown in Fig. 2 the apparatus 10 also includes two magnets 22c and 22d for the orthogonal y direction. The stationary magnet array comprising the magnets 22a to 22d discribes a circumferential or circular pattern around the orthogonal z direction and thus generates a stationary magnetic field A.

The magnetic levitation of the object 11 is effected by the magnets 22a and 22b (Fig. 1) (magnets 22a to 22d in Fig. 2) which repulse the equal-value magnets 12a and 12b (Fig. 1) or the magnets 12a to 12f (Fig. 2). For this purpose the magnets are oppositely polarised, so that they repulse one another. In the vertical z direction (see arrow in Fig. 2) this implies that there is an equilibrium point at which the repulsing magnetic force is equally large but opposite to the attracting force of gravity that is exerted on the magnetic object 11.

At this equilibrium location the magnetic object 11 will be passively stable in a number of degrees of freedom due to magnetic levitation. Passive stability is found in the z direction, rotation around the x axis and rotation around the y axis. In all these degrees of freedom a displacement or distortion is counteracted and a force is developed that brings the array back to its equilibrium location. Rotation around the z axis is marginally stable, that is to say, once the array turns around the z axis, it will keep turning at the same speed. The x axis and the y axis are unstable; in the case of a displacement in the x or y direction forces will develop that move the array ever more away from its equilibrium location. Without a controller the array is unstable in the xy plane. The object 11 is free to rotate around the z axis; there are hardly torques that maintain the object around the z axis. As a result of the discrete magnets there will be a slight weak orientation around the z axis in the case of a standstill.

According to the invention the magnetic object 11 also includes various magnets 12a and 12b (and in Fig. 2 magnets 12a to 12f), which, similar to the magnet array comprising the magnets 2a to 2d also adopt a circumferential or circular pattern on the magnetic object 11. According to the invention the number of magnets that form part of the stationary magnet array of the apparatus 21 is at least equal to the number of magnets disposed on the magnetic object 11. This is understood to mean that these numbers may be equal to each other, but for example may also be four, but in Fig. 2 the object 11 is provided with six magnets 12a to 12f whereas the magnet array is formed by four stationary magnets 22a to 22d.

In this embodiment the magnetic object 11 has six magnets 12a to 12f while the apparatus 21 comprises a stationary magnet array formed by four magnets 22a to 22d. The static magnetic field A generated by the stationary magnet array (the magnets 22a to 22d) produces in combination with gravity an equilibrium location along the orthogonal z axis in which the magnetic object 11 is oriented. The orthogonal z axis is shown by a bold dashed arrow in Fig. 2.

With the aid of the stationary magnet array comprising the magnets 22a to 22d and with the aid of the magnets disposed on the magnetic object 11 a stable orientation along the orthogonal z axis at an equilibrium location can be realized. However, the object 11 can then indeed be displaced in the orthogonal xy plane, as a result of which its location in the orthogonal x direction or y direction is unstable. In order to amend this unstable orientation in the x direction or y direction, sensor means 31 are provided, which are arranged for detecting location deviations relative to the equilibrium location in the orthogonal z axis.

The sensor means 31, which are arranged for detecting position deviations of the magnetic object in the orthogonal xy plane, provided for applying to a controller 30 control signals 31a related to the detection. The controller 30 in Fig. 1 is intended for correction of the location deviations in the x direction. A similar controller is also included in the apparatus, but intended for correction of location deviations in the orthogonal y direction. It should be observed that the sensor means 31 are arranged for detecting location deviations in both the x and the (orthogonal) y direction. Based on the applied control signals 31a the controller 30 (for x or y direction) will actively excite the x coils 32a or 32b (or the y coils 32c and 32d in Fig. 2) in order to generate in free space a controllable magnetic field B with which the location deviations in the x or y direction can be corrected.

By suitable feedback by means of the sensor means 31, any deviation in the orthogonal xy plane can thus be detected and corrected so as to get the magnetic object 11 in a more or less stable orientation at the equilibrium location along the z axis. The excitation of the controllable coils 32a and 32b (32c and 32d) for corrections in the x direction (or y direction respectively), takes place by the supply of control signals 33a and 33b (33c and 33d) by the x or y control means 30.

In Fig. 1B the magnetic field generated by the magnets 22a and 22b is shown by way of illustration. This clearly shows that the magnetic object 11 is located at a larger height than the magnetic object 11' which the known apparatus would adopt if this were used in the apparatus according to the invention.

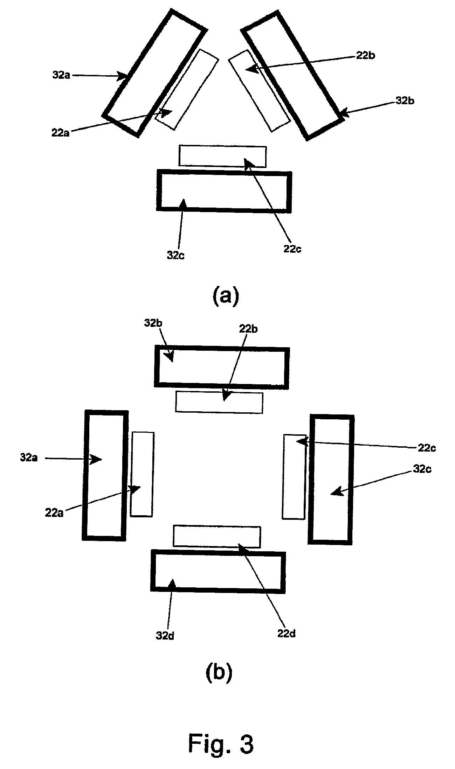

As is clearly shown in Fig. 2, according to the invention also the controllable coils 32a to 32d are arranged in a circular pattern. The number of stationary magnets of the stationary magnet array 22a to 22d is then equal to the number of coils 32a to 32d of the coil marray. Figs. 3a to 3d show various configurations of the stationary magnet array (magnets 22a to 22d) and the controllable coil array (32a to 32d).

According to the invention the number of magnets of the stationary magnet array is to be at least three. For the benefit of a proper stable positioning of the magnetic object 11 at the equilibrium location (along the z axis) it is to be preferred that the number of magnets of the magnetic object 11 is equal to the number of magnets of the stationary magnet array.

Fig. 3a discloses a first configuration of the stationary magnet array and the controllable coil array comprising three stationary magnets 22a to 22c and three controllable coils 32a to 32c. The magnets 22a to 22c and the coils 32a to 32c are oriented in pairs and as such included in the array 10, the magnets 22a to 22c as well as the controllable coils 32a to 32c forming a circumferential or circular pattern, having a symmetrical centre which forms the orthogonal z axis. In the configuration of Fig. 3a the coils 32a to 32c are arranged on the outside of the circular pattern formed by the magnets 22a to 22c.

A similar configuration is shown in Fig. 3b in which the Stationary magnet array is built up from four stationary magnets 22a to 22d and the controllable coil array is built up from four controllable coils 32a to 32d. Here too each magnet and controllable coil forms a pair where both the magnets and the controllable coils describe a circumferential or circular pattern while the coils are arranged on the outside of the pattern formed by the magnets 22a to 22d.

It may be obvious that other configurations too are possible in which also annular magnets can be used, for example an annular magnet built up from various magnet segments which form the various magnets the magnet array is built up from.

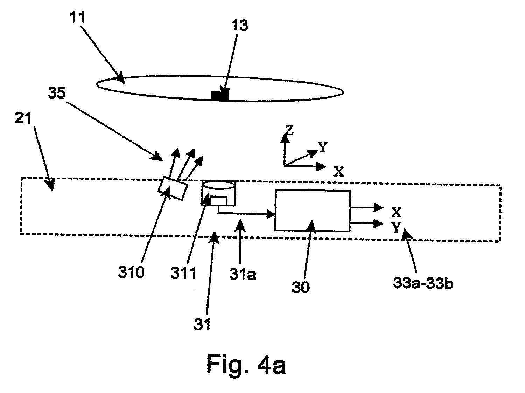

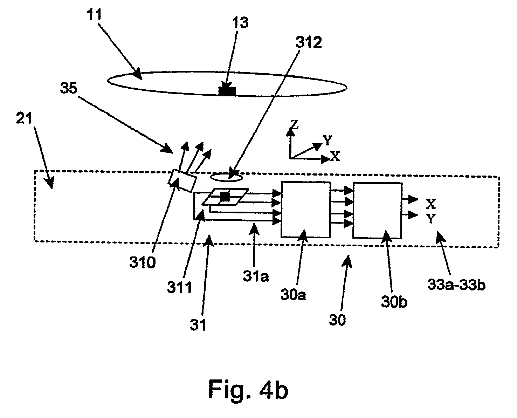

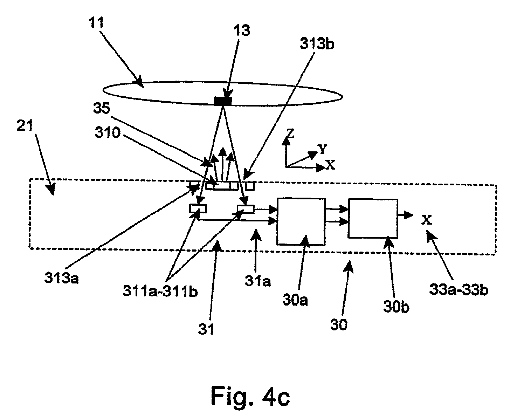

Figs. 4a to 4c show a number of embodiments of the sensor means-cum-control means for the purpose of orientation of the magnetic object 1 at the stable equilibrium location 1. The sensor means 31 cooperate therein with at least one marking element 13 affixed to the magnetic object 11. In the embodiment as shown in Fig. 4a (as well as Figs. 4b and 4c) the sensor means comprise at least one light emitting element 310 and also at least one light receptor element 311, while the marking element 13 is formed by a light reflecting surface.

The light 35 emitted by the light emitting element 310 is then sent in the direction of the magnetic object 11, where at any rate part of the light is reflected by the marking element 13 provided as a light reflecting surface in the direction of the light receiving element 311 which may be provided for example as a photodiode. The reflected light received by the light receptor element 311 is converted into a control signal 31a and applied to the control means 30 which converts the received control signal 31a into suitable control signals 33a and 33b by which the relevant controllable coils are excited for the x or y direction respectively.

In the embodiment as shown in Fig. 4b the light receiving element further includes a lens element 312 which focuses the reflected light (from the marking element 13) on the light receptor element 311, which in this case is arranged in the form of a matrix or array of photodiodes. The photodiodes arranged in the form of an array each produce a control signal 31a in dependence on the intensity of the light that is incident on the relevant photodiode. In Fig. 4b the light receptor element 311 is built up from four photodiodes which thus also supply four different control signals 31a to the control means 30.

In this embodiment the control means 30 for control in both x and y direction comprise an amplifier 30a and a differential controller 30b. Finally, the control means 30 will supply suitable control signals 33a and 33b for both the x and y direction by which control signals the controllable coils are excited for the x or y direction for correcting the location deviations in the orthogonal xy plane with respect to the equilibrium location in the z axis.

In the embodiment of Figs. 4a and 4b the light receptor element 311 is oriented in the z axis while the light emitting element 310 is located outside the z axis. But also a plurality of light emitting elements may be used which are arranged either or not in a circular pattern.

In the embodiment of Fig. 4c the light emitting element 310 is positioned on the x axis and the light receptor element is built up from a plurality of sub-elements 311a to 311d (photodiodes 311a to 311d) which are arranged on either side of the z axis and the light emitting element 310. For this purpose a plurality of openings 313a to 313d is provided in the housing of the apparatus 21 directly beside the light emitting element 310 positioned in the z axis. The openings 313a to 313d each work as a bar opening for the sub-elements 31a to 331d, so that the latter sub-elements are not affected by external incident light which could disturb the levitation control.

In Fig. 4c the sub diodes 311a and 311b are intended for the detection of location deviations in the x direction while it should be observed that for the correction of location deviations in the orthogonal y direction similar sub diodes 311c and 311d are present which, however, are not shown in Fig. 4c but are arranged in a direction perpendicular to the plane of the drawing. The sub diodes 311a and 311b more particularly detect variations in the light distribution (which are a measure for a location deviation in x or y direction). These variations in light distribution are translated by element 30a into useful control signals which are supplied to the controller 30b.

The control means shown in Fig. 4c are thus primarily intended for correcting any location deviation in the x direction. The location deviation (in the x direction) of the magnetic object, detected by the x sub diodes 311a and 311b, results in suitable control signals 31a which are again supplied to the control means 30 meant for the x direction. Reference numeral 30a here refers to an amplifier and reference numeral 30b refers to a differential controller which generates a differential signal denoted by reference numeral 33a and based on the signals supplied by the two x sub diodes 311a and 311b. This control signal 33a is converted into a current signal by a power amplifier by means of the control coils 32a to 32d for correcting the location in the x direction.

Likewise, for correcting a location deviation in the y direction the y sub diodes 311c and 311d also included in the apparatus 21 will deliver suitable signals 31a which result in a differential control signal 33b that is caused by the control means which are intended for the y direction, by which differential control signal 33b the coils 32c and 32d controllable for the y direction are excited.

Although four diodes are used for the control in this embodiment shown in Fig. 4, it is alternatively possible to use a minimum of three diodes which, together with the configuration built up from three coils of Fig. 3a, may be used for setting the magnetic object at a specific height by means of magnetic levitation.

It may be obvious that with the magnetic levitation apparatus according to the invention a more efficient and functional apparatus is realised for orienting a magnetic object at an equilibrium location in free space. Apparatus of this type may be used, for example, for gadget-like play systems.

As a final aspect of the invention is installed an iron plate referenced 23 on which the stationary magnets 22a to 22d and controllable coils 32a to 32d are placed. The provision of an iron plate 23 is optional but the plate can also be used as a kind of yoke by which the efficiency of the magnetic levitation system can be improved. In particular the controllable magnetic force that can be generated by means of the controllable coils 32a to 32d can thus be increased. The plate 23 also serves to shield external magnetic objects.

## Claims

1. Apparatus for orienting a magnetic object (11) in free space with the aid of magnetic levitation, the apparatus comprising:
a magnet array comprising at least three magnets (22a-d) and arranged in a circle around an imaginary axis, which magnet array generates a static magnetic field with an equilibrium location in this field at which the magnetic object can be maintained;
sensor means (31) for detecting location deviations between the current location of the magnetic object and the equilibrium location and, based on the result of the sensing operation, for generating and delivering control signals to:
a coil array (32a-d) comprised of at least three controllable coils, the coil array generating a controllable magnetic field for maintaining the magnetic object at the equilibrium location, each coil of the coil array being arranged at least partly outside the circle in radial direction from the imaginary axis,
wherein the magnetic polarisation of the magnetic object (11) is opposite to that of the magnet array (22a-d), and
wherein the number of magnets of the magnet array is equal to the number of coils of the coil array (32a-d), and the magnets of the magnet array and the coils of the coil array are arranged in pairs,
**characterized in that** the magnets (22a-22c) and the coils (32a-32c) are oriented in pairs where each magnet and controllable coil forms a pair, which pairs forming a circumferential or circular pattern.

2. Apparatus as claimed in claim 1, **characterized in that the** magnets are segments of a circle-shaped magnet array.

3. Apparaus as claimed in claim 1 or 2, **characterized in that** the magnetic object (11) forms part of the apparatus and comprises various magnets (12a-f) which are also arranged in a circle shape.

4. Apparatus as claimed in any one of the preceding claims, **characterized in that** each coil surrounds its corresponding magnet.

5. Apparatus as claimed in claim 1, 2 or 3, **characterized in that** the coils (32a-32c) are arranged on the outside of the circular pattern formed by the magnets (22a-22c).

6. Apparatus as claimed in any one of the preceding claims, **characterized in that** the sensor means (31) cooperate with at least one marking element (13) fixed to the magnetic object (11).

7. Apparatus as claimed in claim 6, **characterized in that** the sensor means (31) comprise at least one light emitting element (31) and at least one light receptor element (311) and the marking element (13) comprises at least one light reflecting surface.

8. Apparatus as claimed in claim 7, **characterized in that** the light receptor element is embodied as an image camera.

9. Apparatus as claimed in claim 7, **characterized in that** the light receptor element (311) comprises at least one or more photodiodes (311a-d).

10. Apparatus as claimed in claim 9, **characterized in that** the photodiodes (311a-d) are arranged as an array.

11. Apparatus as claimed in claim 9 or 10, **characterized in that** the light receptor element comprises a lens element (312).

12. Apparatus as claimed in one of the claims 7 to 11, **characterized in that** the light receptor element is located on the symmetry axis of the static magnetic field.

13. Apparatus as claimed in one of the claims 7 to 11, **characterized in that** the light emitting element is located on the symmetry axis of the static magnetic field.

14. Apparatus as claimed in claim 13, **characterized in that** around the symmetry axis three or more light receptor elements are arranged each behind a bar opening provided in the apparatus.

15. Apparatus as claimed in one or more of the preceding claims, **characterized in that** an iron plate (23) is installed in the apparatus underneath the magnet array (22a-d) and the coil array (32a-d).

## Patentansprüche

1. Vorrichtung für die Ausrichtung eines magnetischen Gegenstands (11) im freien Raum mit Hilfe magnetischer Levitation, die Folgendes umfasst:
ein Magnetsystem, das mindestens drei in einem Kreis um eine imaginäre Achse angeordnete Magneten (22a - 22d) umfasst, mit dem ein statisches Magnetfeld erzeugt wird, welches eine Gleichgewichtsposition aufweist, in der der magnetische Gegenstand fixiert werden kann;
Sensormittel (31) für die Erkennung von Abweichungen zwischen der aktuellen Position des magnetischen Gegenstands und der Gleichgewichtsposition sowie die Erzeugung und Abgabe darauf basierender Steuersignale an:
ein aus mehreren regelbaren Spulen aufgebautes Spulensystem (32a - 32d), mit dem ein regelbares Magnetfeld für die Fixierung des magnetischen Gegenstands in der Gleichgewichtsposition erzeugt wird, wobei jede Spule des Spulensystems, von der imaginären Achse aus in radialer Richtung ausgehend, ganz oder teilweise außerhalb des Kreises angeordnet ist,
wobei die magnetische Polarisierung des magnetischen Gegenstands (11) jener des Magnetsystems (22a - 22d) entgegengesetzt ist, und
wobei die Zahl der Magneten des Magnetsystems gleich der Zahl der Spulen des Spulensystems (32 a - 32d) ist und die Magneten des Magnetsystems und die Spulen des Spulensystems paarweise angeordnet sind,
**dadurch gekennzeichnet, dass** die Magneten (22a - 22c) und die Spulen (32a - 32c) paarweise ausgerichtet sind, wobei jeder Magnet und jede regelbare Spule ein Paar bilden und diese Paare ein Umfangs- oder Ringmuster bilden.

2. Vorrichtung nach Anspruch 1, **dadurch gekennzeichnet, dass** es sich bei den Magneten um Segmente eines ringförmigen Magnetsystems handelt.

3. Vorrichtung nach einem der Ansprüche 1 oder 2, **dadurch gekennzeichnet, dass** der magnetische Gegenstand (11) einen Bestandteil der Vorrichtung bildet und mit mehreren Magneten (12a - 12f) versehen ist, die ebenfalls in einem Kreis angeordnet sind.

4. Vorrichtung nach einem oder mehreren der vorangegangenen Ansprüche, **dadurch gekennzeichnet, dass** jede Spule ihren jeweiligen Magneten umgibt.

5. Vorrichtung nach einem der Ansprüche 1, 2 oder 3, **dadurch gekennzeichnet, dass** die Spulen (32a - 32c) an der Außenseite des von den Magneten (22a - 22c) gebildeten Ringmusters angeordnet sind.

6. Vorrichtung nach einem oder mehreren der vorangegangenen Ansprüche, **dadurch gekennzeichnet, dass** die Sensormittel (31) mit mindestens einem an dem magnetischen Gegenstand (11) angebrachten Markierungselement (13) zusammenwirken.

7. Vorrichtung nach Anspruch 6, **dadurch gekennzeichnet, dass** die Sensormittel (31) mindestens ein Licht abstrahlendes Element (310) und mindestens ein Licht empfangendes Element (311) umfassen, wobei das Markierungselement (13) mindestens eine Licht reflektierende Fläche umfasst.

8. Vorrichtung nach Anspruch 7, **dadurch gekennzeichnet, dass** das Licht empfangende Element als Bildkamera ausgeführt ist.

9. Vorrichtung nach Anspruch 7, **dadurch gekennzeichnet, dass** das Licht empfangende Element mindestens eine oder mehrere Photodioden (311a - 311d) umfasst.

10. Vorrichtung nach Anspruch 9, **dadurch gekennzeichnet, dass** die Photodioden (311a - 311d) als Gruppe angeordnet sind.

11. Vorrichtung nach einem der Ansprüche 9 oder 10, **dadurch gekennzeichnet, dass** das Licht empfangende Element ferner ein Linsenelement (312) umfasst.

12. Vorrichtung nach einem oder mehreren der Ansprüche 7 bis 11, **dadurch gekennzeichnet, dass** sich das Licht empfangende Element in der Symmetrieachse des statischen Magnetfeldes befindet.

13. Vorrichtung nach einem oder mehreren der Ansprüche 7 bis 11, **dadurch gekennzeichnet, dass** sich das Licht abstrahlende Element in der Symmetrieachse des statischen Magnetfeldes befindet.

14. Vorrichtung nach Anspruch 13, **dadurch gekennzeichnet, dass** rings um die Symmetrieachse drei oder mehr Licht empfangende Elemente jeweils hinter einer in der Vorrichtung angebrachten Gitteröffnung angeordnet sind.

15. Vorrichtung nach einem oder mehreren der vorangegangenen Ansprüche, **dadurch gekennzeichnet, dass** in der Vorrichtung unter dem Magnetsystem (22a - 22d) und dem Spulensystem (32a - 32d) eine Eisenplatte (23) angebracht ist.

## Revendications

1. Dispositif pour orienter un objet magnétique (11) dans l'espace libre à l'aide d'une lévitation magnétique, comprenant :
un système d'aimants comprenant au moins trois aimants (22a-d) et étant ordonné en un cercle autour d'un axe imaginaire, lequel système d'aimants génère un champ magnétique statique ayant une position d'équilibre dans laquelle l'objet magnétique peut être maintenu;
des moyens de détection (31) pour détecter des écarts de position entre la position actuelle de l'objet magnétique et la position d'équilibre et, à partir de ces données, pour générer et transmettre des signaux de contrôle à:
un système de bobines (32a-d) construit à partir de plusieurs bobines réglables, lequel système de bobines génère un champ magnétique réglable pour maintenir l'objet magnétique en position d'équilibre, où chaque bobine du système de bobines est placée, tout au moins partiellement, en dehors du cercle dans la direction radiale à partir de l'axe imaginaire,
où la polarisation magnétique de l'objet magnétique (11) est opposée à celle du système d'aimants (22a-d), et
où le nombre d'aimants du système d'aimants est égal au nombre de bobines du système de bobines (32a-d), et les aimants du système d'aimants et les bobines du système de bobines sont ordonnés deux à deux,
**caractérisé en ce que** les aimants (22a-22c) et les bobines (32a-32c) sont orientés deux à deux où chaque aimant et bobine réglable forment une paire, lesquelles paires forment un motif circonférentiel ou circulaire.

2. Dispositif selon la revendication 1, **caractérisé en ce que** les aimants sont des segments d'un système d'aimants circulaire.

3. Dispositif selon la revendication 1 ou 2, **caractérisé en ce que** l'objet magnétique (11) fait partie du dispositif et est pourvu de plusieurs aimants (12a-f) qui sont également ordonnés en un cercle.

4. Dispositif selon une ou plusieurs des revendications précédentes, **caractérisé en ce que** chaque bobine entoure son aimant correspondant.

5. Dispositif selon la revendication 1, 2 ou 3, **caractérisé en ce que** les bobines (32a-32c) sont ordonnées sur le côté extérieur du motif circulaire formé par les aimants (22a-22c).

6. Dispositif selon une ou plusieurs des revendications précédentes, **caractérisé en ce que** les moyens de détection (31) travaillent de pair avec au moins un élément de marquage (13) installé sur l'objet magnétique (11).

7. Dispositif selon la revendication 6, **caractérisé en ce que** les moyens de détection (31) comprennent au moins un élément émetteur de lumière (310) et au moins un élément receveur de lumière (311) et où l'élément de marquage (13) comprend au moins une surface reflétant la lumière.

8. Dispositif selon la revendication 7, **caractérisé en ce que** l'élément receveur de lumière est fait d'une caméra.

9. Dispositif selon la revendication 7, **caractérisé en ce que** l'élément receveur de lumière comprend au moins une ou plusieurs photodiodes (311a-d).

10. Dispositif selon la revendication 9, **caractérisé en ce que** les photodiodes (311a-d) sont ordonnées en une panoplie.

11. Dispositif selon la revendication 9 ou 10, **caractérisé en ce que** l'élément receveur de lumière comprend de plus un élément de lentille (312).

12. Dispositif selon une ou plusieurs des revendications 7 à 11, **caractérisé en ce que** l'élément receveur de lumière est situé dans l'axe de symétrie du champ magnétique statique.

13. Dispositif selon une ou plusieurs des revendications 7 à 11, **caractérisé en ce que** l'élément émetteur de lumière est situé dans l'axe de symétrie du champ magnétique statique.

14. Dispositif selon la revendication 13, **caractérisé en ce que** trois ou plusieurs receveurs de lumière sont établis autour de l'axe de symétrie, chacun derrière une ouverture grillagée installée dans le dispositif.

15. Dispositif selon une ou plusieurs des revendications précédentes, **caractérisé en ce qu**'une plaque métallique (23) est installée dans le dispositif sous le système d'aimants (22a-d) et le système de bobines (32a-d).
